# EUROPEAN PATENT APPLICATION

(11) **EP 4 553 097 A1**
(43) Date of publication of application: **14.05.2025**
(21) Application number: 22954509.0
(22) Date of filing: 11.08.2022
(51) Int. Cl.: C08G 18/83, C08G 18/12, C08F 290/00, C09J 151/08

(54) **MODIFIED BIO-BASED WATERBORNE POLYURETHANE, METHOD FOR PREPARING SAME, AND USE THEREOF**

(71) Applicant: Mojia (Shanghai) Biotech Co., Ltd, Shanghai 201210 (CN)
(72) Inventor: LAU, Man Kit, Shanghai 201203 (CN); WEI, Xiaojun, Shanghai 201203 (CN); CHIEW, Ansen, Shanghai 201203 (CN)
(74) Representative: Cabinet Laurent & Charras
(86) International application number: PCT/CN2022/111803
(87) International publication number: WO 2024/031542

(57) **Abstract**

The present application provides a modified bio-based waterborne polyurethane, a method for preparing same, and use thereof. The modified bio-based waterborne polyurethane is prepared from the following starting materials: 50-150 parts by weight of a bio-based polyol, 5-30 parts by weight of a diisocyanate, 0.1-10 parts by weight of a reactive emulsifier, 20-200 parts by weight of an alkenyl-containing monomer, and 0.01-5 parts by weight of an initiator, wherein the diisocyanate includes aliphatic diisocyanates containing an odd number of carbon atoms. According to the present application, by means of the design and compounding of the starting materials, the modified bio-based waterborne polyurethane is made to have an adjustable thermal activation temperature, high film-forming strength, good weather resistance, complete resistance to yellowing, good adhesion to different substrates, excellent bonding performance, heat resistance, water resistance, hydrolysis resistance, stability, and high bio-base content. The modified bio-based waterborne polyurethane is prepared using a solvent-free method and is an environmentally friendly high-performance waterborne polyurethane product.

## Description

### TECHNICAL FIELD

The present application belongs to the technical field of polymer materials, and specifically relates to a modified bio-based waterborne polyurethane, a preparation method therefor and an application thereof.

### BACKGROUND

Polyurethane is a polymer generated by the reaction of polyol and polyisocyanate, which has the characteristics of adjustable hardness, solvent resistance, low-temperature resistance, and good adhesion with most materials, and has been widely used in recent years. Waterborne polyurethane is a polyurethane system using water as a dispersion medium, and it has the advantages of low volatile organic compounds (VOC), no pollution and non-combustibility while having the performance characteristics of polyurethane. With the improvement of environmental protection laws and regulations and the enhancement of people's environmental awareness, the waterborne polyurethane has attracted more and more attention, and the development and application of the waterborne polyurethane has become an important development direction of the polyurethane industry. At present, the waterborne polyurethane, as a polymer material with excellent performance, is widely used in adhesives, coatings, textiles and other fields. The waterborne polyurethane has a good market prospect in the adhesive industry. For example, the waterborne polyurethane products such as Dispercoll U54, Dispercoll U53, and Adwel1645 have good comprehensive performance, and the adhesives made therefrom are used in the industries of shoes, automobiles, furniture, card making, etc.

With the widening of the application scope of the waterborne polyurethane, it has been found that the waterborne polyurethane also has some non-negligible shortcomings, such as low solid content, poor water resistance, and insufficient stability. In order to improve the performance of waterborne polyurethane, the modification of waterborne polyurethanes is the common solution for researchers nowadays.

CN103249751A discloses a heat-sealable coating system and a method of bonding surfaces, and the heat-sealable coating system comprises a component (I) of polyurethane and/or a polyurethane-polyurea polymer, and a component (II) of an olefin vinyl acetate copolymer, wherein the polyurethane and/or polyurethane-polyurea polymer has a glass transition temperature of ≤ 10°C, and the olefin vinyl acetate copolymer has a minimum film-forming temperature of > 40°C; in the preparation of the heat-sealable coating system, a waterborne dispersion of the polyurethane and/or polyurethane-polyurea is first prepared, and then the olefin vinyl acetate copolymer is added to the waterborne dispersion to obtain an waterborne heat-sealable coating system which can form a film at room temperature, and has a good surface-adhesive strength. This heat-sealable coating system uses physical blending to prepare a blended waterborne dispersion of the olefin vinyl acetate copolymer-waterborne polyurethane, and the two waterborne dispersions have poor compatibility and stability, and the initial adhesive strength cannot be easily established.

CN111320726A discloses a waterborne polyurethane-poly(vinyl acetate) emulsion, and the raw materials comprises: 80-120 parts of a diisocyanate-terminated prepolymer, 50-250 parts of a component for dissolving and diluting the diisocyanate-terminated prepolymer, 2.5-7 parts of a small-molecule amine chain extender, 0.05-4 parts of a monoamino small-molecule terminating agent, 30-120 parts of vinyl acetate, a protection colloid, a free radical initiator, and water. This waterborne polyurethane-poly(vinyl acetate) emulsion is a waterborne system prepared by a chemical modification method, which has a low activation temperature, good heat resistance and initial strength; however, only vinyl acetate is used as a modifying monomer in the formula, the glass transition temperature is high, and meanwhile, the poly(vinyl acetate) is easy to be hydrolyzed, affecting the water resistance of the product in the later stage.

CN103031093A discloses a preparation method for a waterborne polyurethane acrylate pressure-sensitive adhesive, and the steps are as follows: firstly, a polyol, a hydrophilic chain extender, an isocyanate monomer, and a hydroxyl-containing acrylate monomer are used as raw materials for preparing a waterborne polyurethane emulsion; then acrylates dissolved with a stoichiometric initiator are added to the waterborne polyurethane emulsion for reacting to obtain a waterborne polyurethane acrylate copolymerization emulsion; finally, the emulsion is mixed uniformly with a tackifying resin to obtain a waterborne polyurethane acrylate pressure-sensitive adhesive emulsion. This waterborne polyurethane acrylate pressure-sensitive adhesive combines the advantages of both waterborne polyurethane and acrylate, so that the mechanical properties and solvent resistance have been improved, but the waterborne polyurethane acrylate have poor water resistance and aging resistance, and the adhesion performance has obvious defects at high temperature.

Overall, the current physically or chemically modified waterborne polyurethane products have much room for improvement in the water resistance, stability, adhesion performance, and heat resistance. More importantly, the mainstream synthesis process of the waterborne polyurethane in the market is the acetone method, that is, acetone is used as a solvent in the synthesis to reduce the viscosity of the prepolymer, and then acetone is removed by reduced-pressure distillation after the emulsification of emulsion is completed, and finally, the waste acetone is fed into the distillation tower for distillation and reuse. However, acetone is a Class A hazardous chemical, and the use of acetone greatly increases the production and safety costs of the factories, and it is difficult to meet the requirements of green development.

Therefore, it is an urgent problem to be solved in this field to develop a waterborne polyurethane product that has excellent water resistance, stability, adhesion performance, heat resistance and a green preparation process.

### SUMMARY

The present application provides a modified bio-based waterborne polyurethane, a preparation method therefor and an application thereof, wherein through the design and compounding of raw materials, the modified bio-based waterborne polyurethane has an adjustable thermal activation temperature and excellent water resistance, stability, adhesion and heat resistance. The modified bio-based waterborne polyurethane can be prepared by a solvent-free method, which is green and environmentally friendly in terms of both materials and process, thus providing a new direction for the green industrialization of high-performance polyurethane.

In a first aspect, the present application provides a modified bio-based waterborne polyurethane, and raw materials of the modified bio-based waterborne polyurethane comprise the following components by weight:

| | |
|---|---|
| bio-based polyol | 50-150 parts; |
| diisocyanate | 5-30 parts; |
| reactive emulsifier | 0.1-10 parts; |
| alkenyl-containing monomer | 20-200 parts; and |
| initiator | 0.01-5 parts; |

wherein the diisocyanate comprises an aliphatic diisocyanate having an odd number of carbon atoms.

For the modified bio-based waterborne polyurethane provided by the present application, in one aspect, the waterborne polyurethane is obtained through the reaction of the bio-based polyol, diisocyanate, and reactive emulsifier; in the other aspect, the alkenyl-containing monomer is polymerized under the action of the initiator and reacts with the waterborne polyurethane to construct a three-dimensional chemical-bonding network structure in the system, and by means of free radical polymerization interpenetrating network copolymerization, a high-molecular-mass polymer (based on the alkenyl-containing monomer) and bio-based polyurethane form a molecular-level composite system to obtain the high-performance modified bio-based waterborne polyurethane. Also, the present application adopts bio-based polyol that not only has a good crystallization property and green environmentally-friendly characteristics, but also effectively improves the adhesion, heat resistance, water resistance and stability of the modified bio-based waterborne polyurethane; furthermore, by combining an aliphatic diisocyanate having an odd number of carbon atoms with components such as bio-based polyol, the thermal activation temperature of the modified bio-based waterborne polyurethane is effectively regulated and also the symmetry and crystallization property of the polymer is also reduced, and the operability of the preparation process is enhanced. Therefore, in the present application, through the design and mutual compounding of the raw materials, the modified bio-based waterborne polyurethane has an adjustable thermal activation temperature and excellent adhesion, heat resistance, water resistance, and stability, and especially maintains excellent adhesion after the hydrolysis aging treatment and at high temperature. More importantly, in the present application, a bio-based raw material (bio-based polyol or bio-based diisocyanate) is adopted, which has green and sustainable characteristics, and the preparation employs a solvent-free method without the use of organic solvents such as acetone, realizing solvent-free and low VOC emission.

In the present application, the aliphatic diisocyanate having an odd number of carbon atoms can have 5, 7, 9, or 11 carbon atoms.

In the raw materials of the present application, the bio-based polyol is 50-150 parts by weight, which can be, for example, 60 parts, 70 parts, 80 parts, 90 parts, 100 parts, 110 parts, 120 parts, 130 parts or 140 parts, etc.

The diisocyanate is 5-30 parts by weight, which can be, for example, 6 parts, 8 parts, 10 parts, 12 parts, 15 parts, 18 parts, 20 parts, 22 parts, 25 parts, or 28 parts, etc.

The reactive emulsifier is 0.1-10 parts by weight, which can be, for example, 0.3 parts, 0.5 parts, 0.8 parts, 1 part, 2 parts, 3 parts, 4 parts, 5 parts, 6 parts, 7 parts, 8 parts, or 9 parts, etc.

The alkenyl-containing monomer is 20-200 parts by weight, which can be, for example, 30 parts, 40 parts, 50 parts, 60 parts, 70 parts, 80 parts, 90 parts, 100 parts, 110 parts, 120 parts, 130 parts, 140 parts, 150 parts, 160 parts, 170 parts, 180 parts, or 190 parts, etc.

The initiator is 0.01-5 parts by weight, which can be, for example, 0.03 parts, 0.05 parts, 0.08 parts, 0.1 parts, 0.3 parts, 0.5 parts, 0.7 parts, 0.9 parts, 1 part, 1.2 parts, 1.5 parts, 1.8 parts, 2 parts, 2.5 parts, 3 parts, 3.5 parts, 4 parts, or 4.5 parts, etc.

Preferably, the bio-based polyol has a hydroxyl value of 28-112 mg KOH/g, which can be, for example, 30 mg KOH/g, 40 mg KOH/g, 50 mg KOH/g, 60 mg KOH/g, 70 mg KOH/g, 80 mg KOH/g, 90 mg KOH/g, 100 mg KOH/g, or 110 mg KOH/g, etc.

Preferably, the bio-based polyol has a number average molecular mass of 1000-5000, which can be, for example, 1200, 1500, 1800, 2000, 2200, 2500, 2800, 3000, 3200, 3500, 3800, 4000, 4200, 4500, or 4800, etc.

Preferably, the bio-based polyol is bio-based polyester polyol and/or bio-based polyether polyol.

In the present application, the bio-based polyol can be commercially available or prepared by the chemical synthesis method known in the art.

Preferably, a raw material of the bio-based polyester polyol comprises a combination of a polyacid and a small-molecule polyol; wherein the polyacid comprises at least one bio-based polyacid, and/or, the small-molecule polyol comprises at least one bio-based small-molecule polyol.

In the present application, the polyacid and the small-molecule polyol for the preparation of the bio-based polyester polyol comprise at least one bio-based raw material (bio-based polyacid and/or bio-based small-molecule polyol).

Preferably, the bio-based polyacid comprises any one or a combination of at least two of succinic acid, glutaric acid, sebacic acid, undecanedioic acid, dodecanedioic acid, hydrogenated dimer acid, or hydrogenated ricinoleic acid.

Preferably, the small-molecule polyol further comprises a petroleum-based small-molecule polyol (such as 1,6-hexanediol).

Preferably, the bio-based small-molecule polyol comprises any one or a combination of at least two of ethylene glycol, propylene glycol, butylene glycol, pentylene glycol, glycerol, or hydrogenated dimer alcohol.

Preferably, the bio-based polyether polyol comprises poly(trimethylene ether) glycol.

In the present application, the bio-based polyester polyol is prepared by a condensation polymerization reaction of the polyacid and the small-molecule polyol; wherein the polyacid comprises at least one bio-based polyacid, and/or, the small-molecule polyol comprises at least one bio-based small-molecule polyol.

Preferably, the raw material of the bio-based polyester polyol comprises the following components by weight: 100-200 parts of a polyacid (such as 110 parts, 120 parts, 130 parts, 140 parts, 150 parts, 160 parts, 170 parts, 180 parts, or 190 parts, etc.); 40-200 parts of a small-molecule polyol (such as 50 parts, 60 parts, 70 parts, 80 parts, 90 parts, 100 parts, 110 parts, 120 parts, 130 parts, 140 parts, 150 parts, 160 parts, 170 parts, 180 parts, or 190 parts, etc.); and 0.001-0.1 parts of a condensation polymerization catalyst (such as 0.003 parts, 0.005 parts, 0.007 parts, 0.009 parts, 0.01 parts, 0.02 parts, 0.03 parts, 0.04 parts, 0.05 parts, 0.06 parts, 0.07 parts, 0.08 parts, or 0.09 parts, etc.).

Preferably, the condensation polymerization catalyst comprises a titanate compound, further preferably tetraisopropyl titanate.

Preferably, the aliphatic diisocyanate having an odd number of carbon atoms is a linear aliphatic diisocyanate having an odd number of carbon atoms; preferably, the aliphatic diisocyanate having an odd number of carbon atoms has a structure of 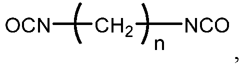 wherein n represents a number of methylene and n is an odd number, which can be, for example, 3, 5, or 7, etc.

Preferably, the aliphatic diisocyanate having an odd number of carbon atoms comprises 1,5-pentamethylene diisocyanate.

Preferably, the mass percentage of the aliphatic diisocyanate having an odd number of carbon atoms is ≥ 60% in the diisocyanate, which can be, for example, 65%, 70%, 75%, 80%, 85%, 90%, 95%, or 100%, etc.

In a preferred embodiment of the present application, the diisocyanate comprises an aliphatic diisocyanate having an odd number of carbon atoms, and other optional aliphatic diisocyanate and/or an optional alicyclic diisocyanate; at the same time, in the diisocyanate, the mass percentage of the aliphatic diisocyanate having an odd number of carbon atoms is ≥ 60%, so as to effectively regulate the thermal activation temperature of the modified bio-based waterborne polyurethane, reduce the symmetry and crystallization property of the polymer, and give the modified bio-based waterborne polyurethane better comprehensive performance. If the mass percentage content of the aliphatic diisocyanate having an odd number of carbon atoms in the diisocyanate is <60%, the polymer will be affected in its symmetry and crystallization property, and thus has an overly high viscosity, being difficult to process and use.

Preferably, the mass percentage of 1,5-pentamethylene diisocyanate is ≥ 60% in the diisocyanate, which can be, for example, 65%, 70%, 75%, 80%, 85%, 90%, 95%, or 100%, etc.

Preferably, the 1,5-pentamethylene diisocyanate (PDI) is bio-based 1,5-pentamethylene diisocyanate.

Preferably, the diisocyanate further comprises other aliphatic diisocyanate and/or an alicyclic diisocyanate.

Preferably, the other aliphatic diisocyanate comprises 1,6-hexamethylene diisocyanate.

Preferably, the aliphatic diisocyanate comprises isophorone diisocyanate and/or dicyclohexylmethane diisocyanate.

Preferably, the diisocyanate is an aliphatic diisocyanate having an odd number of carbon atoms, and further preferably, 1,5-pentamethylene diisocyanate (PDI).

In a preferred embodiment of the present application, the thermal activation temperature of the modified bio-based waterborne polyurethane is adjustable by the design of a specific aliphatic diisocyanate having an odd number of carbon atoms, so that the modified bio-based waterborne polyurethane can be applied to various products with different thermal activation temperature.

Preferably, the modified bio-based waterborne polyurethane has a thermal activation temperature of 20-130°C, which can be, for example, 30°C, 40°C, 50°C, 60°C, 70°C, 80°C, 90°C, 100°C, 110°C, or 120°C, etc.

In the present application, the reactive emulsifier is involved in the preparation of the waterborne polyurethane, and in a preferred embodiment, the reactive emulsifier is non-ionic reactive emulsifier and/or a sulfonic acid reactive emulsifier, which can, on the one hand, give the polyurethane a water-dispersible property, and on the other hand, help to enhance the hydrolysis resistance of the modified bio-based waterborne polyurethane.

Preferably, the reactive emulsifier comprises any one or a combination of at least two of poly(ethylene glycol) monomethyl ether, poly(ethylene glycol), ethylene oxide-propylene oxide copolymer diol, sodium propylene oxide-butylene glycol sulfonate, or sodium diaminoethyl sulfonate, and further preferably, a combination of poly(ethylene glycol) monomethyl ether and sodium diaminoethyl sulfonate.

Preferably, the raw materials comprise 0.1-5 parts by weight of poly(ethylene glycol) monomethyl ether, which can be, for example, 0.3 parts, 0.5 parts, 0.8 parts, 1 part, 1.5 parts, 2 parts, 2.5 parts, 3 parts, 3.5 parts, 4 parts, or 4.5 parts, etc.

Preferably, the raw materials comprise 0.1-5 parts by weight of sodium diaminoethyl sulfonate, which can be, for example, 0.3 parts, 0.5 parts, 0.8 parts, 1 part, 1.5 parts, 2 parts, 2.5 parts, 3 parts, 3.5 parts, 4 parts, or 4.5 parts, etc.

Preferably, the alkenyl-containing monomer comprises any one or a combination of at least two of vinyl acetate monomer, vinyl tertiary-carbon ester monomer, acrylonitrile monomer, or acrylate monomer.

Preferably, the vinyl tertiary-carbon ester comprises vinyl neodecanoate.

Preferably, the acrylate monomer comprises any one or a combination of at least two of ethyl acrylate, butyl acrylate, tert-butyl acrylate, isooctyl acrylate, lauryl acrylate, hydroxyethyl acrylate, isobornyl acrylate, methyl methacrylate, butyl methacrylate, tert-butyl methacrylate, isooctyl methacrylate, lauryl methacrylate, isobornyl methacrylate, or hydroxyethyl methacrylate.

Preferably, the alkenyl-containing monomer comprises vinyl neodecanoate, and optional vinyl acetate and/or an optional acrylate monomer.

Preferably, the mass percentage of vinyl neodecanoate in the alkenyl-containing monomer is 15-100%, which can be, for example, 20%, 25%, 30%, 35%, 40%, 45%, 50%, 55%, 60%, 65%, 70%, 75%, 80%, 85%, 90%, or 95%, etc., and further preferably, 20-40%.

In a preferred embodiment of the present application, the alkenyl-containing monomer comprises vinyl neodecanoate, which is combined with other components to further enhance the hydrolysis resistance, weathering resistance, and heat resistance of the modified bio-based waterborne polyurethane.

Preferably, the alkenyl-containing monomer comprises hydroxyethyl acrylate and/or hydroxyethyl methacrylate, so that the modified bio-based waterborne polyurethane contains a hydroxyl functional group and can be used in a two-component adhesive.

Preferably, the initiator comprises an oxidation-reduction initiation system.

Preferably, in the oxidation-reduction initiation system, an oxidizing agent comprises any one or a combination of at least two of organic peroxide, hydrogen peroxide, or persulfate salt, and further preferably, organic peroxide.

Preferably, the oxidizing agent comprises any one or a combination of at least two of potassium persulfate, sodium persulfate, ammonia persulfate, tert-butyl hydroperoxide, benzoyl peroxide, lauryl peroxide, isopropylbenzene hydroperoxide, di-tert-butyl peroxide, diisopropylbenzene peroxide, tert-butyl peroxybenzoate, tert-butyl peroxypivalate, methyl ethyl ketone peroxide, cyclohexanone peroxide, diisopropyl peroxydicarbonate, dicyclohexyl peroxydicarbonate, or hydrogen peroxide.

Preferably, in the oxidation-reduction initiation system, a reducing agent is any one or a combination of at least two of sodium metabisulfite, sodium hydrogen sulfite, ferrous sulfate, sodium dithionite, isoascorbic acid, *N*,*N*-dimethylaniline, *N,N*-diethylaniline, ferrous pyrophosphate, mercaptan, ferrous chloride, or tetraethylenimine, and further preferably sodium dithionite (also known as "insurance powder").

Preferably, the raw materials further comprise any one or a combination of at least two of catalyst, chain extender, polymerization inhibitor, crosslinking agent, or emulsion polymerization emulsifier.

Preferably, the raw materials further comprise 0.001-0.5 parts by weight of the catalyst, which can be, for example, 0.003 parts, 0.005 parts, 0.007 parts, 0.009 parts, 0.01 parts, 0.03 parts, 0.05 parts, 0.07 parts, 0.09 parts, 0.1 parts, 0.2 parts, 0.3 parts, or 0.4 parts, etc.

Preferably, the catalyst comprises an organo-bismuth catalyst, further preferably bismuth neodecanoate.

Preferably, the raw materials further comprise 0.1-5 parts by weight of the chain extender, which can be, for example, 0.2 parts, 0.5 parts, 0.8 parts, 1 part, 1.5 parts, 2 parts, 2.5 parts, 3 parts, 3.5 parts, 4 parts, or 4.5 parts, etc.

Preferably, the chain extender comprises an alcohol chain extender and/or an amine chain extender, and further preferably, an alcohol chain extender.

Preferably, the alcohol chain extender comprises any one or a combination of at least two of propylene glycol, dipropylene glycol, or diethylene glycol.

Preferably, the raw materials further comprise 0.0001-0.1 parts by weight of the polymerization inhibitor, which can be, for example, 0.0003 parts, 0.0005 parts, 0.0007 parts, 0.0009 parts, 0.001 parts, 0.003 parts, 0.005 parts, 0.007 parts, 0.009 parts, 0.01 parts, 0.03 parts, 0.05 parts, 0.07 parts, or 0.09 parts, etc.

Preferably, the polymerization inhibitor comprises any one or a combination of at least two of p-hydroxyanisole, p-benzoquinone, or hydroquinone.

Preferably, the raw materials further comprise 0.1-8 parts by weight of the crosslinking agent, which can be, for example, 0.3 parts, 0.5 parts, 0.8 parts, 1 part, 1.5 parts, 2 parts, 2.5 parts, 3 parts, 3.5 parts, 4 parts, 4.5 parts, 5 parts, 5.5 parts, 6 parts, 6.5 parts, 7 parts, or 7.5 parts, etc.

Preferably, the crosslinking agent comprises any one or a combination of at least two of glycidyl methacrylate, diacetone acrylamide, ethylene glycol acetoacetate methacrylate, or adipic dihydrazide, and further preferably, a combination of diacetone acrylamide and adipic dihydrazide.

Preferably, the raw materials further comprise 0.1-5 parts by weight of diacetone acrylamide, which can be, for example, 0.3 parts, 0.5 parts, 0.8 parts, 1 part, 1.5 parts, 2 parts, 2.5 parts, 3 parts, 3.5 parts, 4 parts, or 4.5 parts, etc.

Preferably, the raw materials further comprise 0.1-3 parts by weight of adipic dihydrazide, which can be, for example, 0.3 parts, 0.5 parts, 0.8 parts, 1 part, 1.2 parts, 1.5 parts, 1.8 parts, 2 parts, 2.2 parts, 2.5 parts, or 2.8 parts, etc.

Preferably, the raw materials further comprise 0.01-5 parts by weight of the emulsion polymerization emulsifier, which can be, for example, 0.05 parts, 0.1 parts, 0.3 parts, 0.5 parts, 0.8 parts, 1 part, 1.5 parts, 2 parts, 2.5 parts, 3 parts, 3.5 parts, 4 parts, or 4.5 parts, etc.

Preferably, the emulsion polymerization emulsifier comprises anionic surfactant and/or non-ionic surfactant.

Preferably, the emulsion polymerization emulsifier comprises an allyloxy isomeric alcohol ether sulfate ammonia salt and/or a sulfosuccinate alkyl alcohol ether sodium salt.

Preferably, the raw materials further comprise pH adjusting agent and/or defoaming agent.

Preferably, the raw materials further comprise 0.001-0.5 parts by weight of pH adjusting agent, which can be, for example, 0.003 parts, 0.005 parts, 0.008 parts, 0.01 parts, 0.03 parts, 0.08 parts, 0.1 parts, 0.2 parts, 0.3 parts, or 0.4 parts, etc.

Preferably, the raw materials further comprise 0.001-0.1 parts by weight of the defoaming agent, which can be, for example, 0.003 parts, 0.005 parts, 0.007 parts, 0.009 parts, 0.01 parts, 0.02 parts, 0.03 parts, 0.04 parts, 0.05 parts, 0.06 parts, 0.07 parts, 0.08 parts, or 0.09 parts, etc.

In a preferred embodiment of the present application, the raw materials of the modified bio-based waterborne polyurethane comprise the following components by weight:

| | |
|---|---|
| bio-based polyol | 50-150 parts; |
| diisocyanate | 5-30 parts; |
| reactive emulsifier | 0.1-10 parts; |
| catalyst | 0.001-0.5 parts; |
| chain extender | 0.1-5 parts; |
| polymerization inhibitor | 0.0001-0.1 parts; |
| alkenyl-containing monomer | 20-200 parts; |
| crosslinking agent | 0-8 parts; |
| emulsion polymerization emulsifier | 0.01-5 parts; |
| initiator | 0.01-5 parts; and |
| pH adjusting agent | 0.01-0.5 parts; |

wherein the aliphatic diisocyanate having a structure of 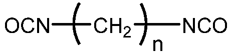 in the diisocyanate has the mass percentage of ≥ 60%; and n is an odd number, which can be, for example, 3, 5, or 7, etc.

Preferably, the raw materials further comprise water.

In the present application, the mass of water can be adjusted according to the needs of process and actual solid contents; preferably, the modified bio-based waterborne polyurethane is an emulsion, and an amount of water is used to provide the emulsion with a solid content of 40-60%; for example, the solid content can be 42%, 45%, 48%, 50%, 52%, 55%, 58%, etc., further preferably, 45-55%.

Preferably, based on a total mass of components in the raw materials excluding water being 100%, the mass of the alkenyl-containing monomer is 30-70%, which can be, for example, 35%, 40%, 45%, 50%, 55%, 60%, or 65%, etc.

In a second aspect, the present application provides a preparation method for the modified bio-based waterborne polyurethane as described in the first aspect; the preparation method comprises the following steps:
(1) mixing and reacting bio-based polyol, diisocyanate, reactive emulsifier, and alkenyl-containing monomer to obtain a polyurethane prepolymer containing the alkenyl-containing monomer;
(2) mixing the polyurethane prepolymer containing the alkenyl-containing monomer obtained in step (1) with an aqueous phase, and emulsifying to obtain a polyurethane emulsion containing the alkenyl-containing monomer; and
(3) reacting the polyurethane emulsion containing the alkenyl-containing monomer obtained in step (2) in the presence of an initiator to obtain the modified bio-based waterborne polyurethane.

The preparation method provided in the present application is a solvent-free process, wherein the alkenyl-containing monomer serves as a reaction medium in the preparation of the polyurethane prepolymer of step (1), so that the preparation method does not require the use of organic solvents such as acetone, and has the characteristics of solvent free and very low VOC emission. The polyurethane prepolymer is emulsified to form a polyurethane emulsion, and the emulsification process does not require the use of a complex and expensive powerful emulsification device, and furthermore, the free radical polymerization occurs under the action of an initiator, and by means of free radical polymerization interpenetrating network copolymerization, a high-molecular-mass polymer (produced by the polymerization of the alkenyl-containing monomer) and bio-based polyurethane form a molecular-level composite system, a polymer alloy emulsion with good compatibility and excellent performance, i.e., the modified bio-based waterborne polyurethane.

Preferably, materials mixed in step (1) further comprise any one or a combination of at least two of catalyst, chain extender or polymerization inhibitor.

Preferably, a method for the mixing and reacting in step (1) comprises method A or method B. The method A comprises: first mixing bio-based polyol, diisocyanate, polymerization inhibitor, catalyst, reactive emulsifier (30-70% of formula amount) (which can be, for example, 35%, 40%, 45%, 50%, 55%, 60%, or 65%, etc.), and alkenyl-containing monomer (10-90% of formula amount) (which can be, for example 15%, 20%, 25%, 30%, 35%, 40%, 45%, 50%, 55%, 60%, 65%, 70%, 75%, 80%, or 85%, etc.) and performing a first-stage reaction; then adding chain extender and the remainder of formula amount of the alkenyl-containing monomer to the system, and performing a second-stage reaction; then adding the remainder of formula amount of the reactive emulsifier to the system and performing a third-stage reaction to obtain the polyurethane prepolymer containing the alkenyl-containing monomer;
The method B comprises: first mixing bio-based polyol, diisocyanate, polymerization inhibitor, catalyst, reactive emulsifier, and alkenyl-containing monomer (10-90% of formula amount) (which can be, for example, 15%, 20%, 25%, 30%, 35%, 40%, 45%, 50%, 55%, 60%, 65%, 70%, 75%, 80%, or 85%, etc.), and performing a first-stage reaction; then adding chain extender and the remainder of formula amount of the alkenyl-containing monomer to the system, and performing a second-stage reaction to obtain the polyurethane prepolymer containing the alkenyl-containing monomer.

Preferably, the reactive emulsifier comprises poly(ethylene glycol) monomethyl ether and sodium diaminoethyl sulfonate, and the method for the mixing and reacting in step (1) is the method A, comprising first adding poly(ethylene glycol) monomethyl ether to participate in the first-stage reaction, and adding sodium diaminoethyl sulfonate prior to performing the third-stage reaction.

Preferably, the first-stage reaction and the second-stage reaction are each independently performed at a temperature of 55-80°C, which can be, for example, 58°C, 60°C, 62°C, 65°C, 68°C, 70°C, 72°C, 75°C, or 78°C, etc.

Preferably, the first-stage reaction and the second-stage reaction are each independently performed for a period of 1-4 h, which can be, for example, 1.25 h, 1.5 h, 1.75 h, 2 h, 2.25 h, 2.5 h, 2.75 h, 3 h, 3.25 h, 3.5 h, or 3.75 h, etc.

Preferably, in the method A, a NCO content of the system is < 0.91% after the completion of the second-stage reaction.

Preferably, in the method B, a NCO content of the system is < 0.2% after the completion of the second-stage reaction.

Preferably, the third-stage reaction is performed at a temperature of 40-50°C, which can be, for example, 41°C, 43°C, 45°C, 47°C, or 49°C, etc.

Preferably, the third-stage reaction is performed for a period of 10-60 min, which can be, for example, 15 min, 20 min, 25 min, 30 min, 35 min, 40 min, 45 min, 50 min, or 55 min, etc.

Preferably, the aqueous phase in step (2) comprises water, optional crosslinking agent, optional emulsion polymerization emulsifier, and optional defoaming agent.

Preferably, a method for the emulsifying in step (2) comprises: adding the polyurethane prepolymer containing the alkenyl-containing monomer to the aqueous phase and dispersing to obtain the polyurethane emulsion containing the alkenyl-containing monomer.

Preferably, the polyurethane prepolymer containing the alkenyl-containing monomer is added to the aqueous phase under stirring.

Preferably, the dispersing is performed under stirring.

Preferably, a speed of the stirring is 400-600 rpm, which can be, for example, 420 rpm, 450 rpm, 480 rpm, 500 rpm, 520 rpm, 550 rpm, or 580 rpm, etc.

Preferably, the dispersing is performed for a period of 1-3 h, which can be, for example, 1.25 h, 1.5 h, 1.75 h, 2 h, 2.25 h, 2.5 h, or 2.75 h, etc.

Preferably, the reaction in step (3) is performed at a temperature of 50-60°C, which can be, for example, 51°C, 52°C, 53°C, 54°C, 55°C, 56°C, 57°C, 58°C, or 59°C, etc.

Preferably, the reaction in step (3) is performed for a period of 20-90 min, which can be, for example, 25 min, 30 min, 35 min, 40 min, 45 min, 50 min, 55 min, 60 min, 65 min, 70 min, 75 min, 80 min, or 85 min, etc.

Preferably, after the completion of the reaction in step (3), the preparation method also comprises a step of adjusting pH.

Preferably, the pH is adjusted to 6.5-9.0; for example, the pH is 6.6, 6.8, 7.0, 7.2, 7.5, 7.8, 8.0, 8.2, 8.5, or 8.8, etc.

In a third aspect, the present application provides an application of the modified bio-based waterborne polyurethane as described in the first aspect in coatings or adhesives.

In a fourth aspect, the present application provides an adhesive, and the adhesive comprises the modified bio-based waterborne polyurethane as described in the first aspect.

Preferably, the adhesive also comprises any one or a combination of at least two of thickening agent, wetting agent, defoaming agent, pH adjusting agent, or curing agent.

Compared to the prior art, the present application has the following beneficial effects.
(1) Through the design and mutual compounding of the raw materials, the modified bio-based waterborne polyurethane provided by the present application has an adjustable thermal activation temperature over the range of 20-120°C, high film-forming strength, good weathering resistance, yellowing resistance, good adhesion to different substrates, excellent adhesion performance, heat resistance, water resistance, hydrolysis resistance, stability, and a high bio-based content, which is a green, environmentally friendly, high-performance waterborne polyurethane product.
(2) In the present application, through the design of raw materials and process routes, the modified bio-based waterborne polyurethane is prepared by the solvent-free method without using complex and expensive equipment. Through common production equipment, the preparation method can realize solvent-free process, and has simple steps, good operability, low preparation cost, and low VOC emission, which fully meets the requirements of energy conservation and emission reduction, and is green and environmentally friendly.
(3) In the present application, through the design and further optimization of the components, the modified bio-based waterborne polyurethane can be used for the preparation of high-performance adhesives and meet the needs of one-component or two-component. The adhesive can rapidly establish high initial adhesive strength, the instantaneous peel strength of the adhesive after the full thermal activation is ≥ 5.5 N/mm, and the adhesion performance is excellent, and the final peel strength is ≥ 10 N/mm, and can reach more than or equal to 20 N/mm. The adhesive has good water resistance, hydrolysis resistance, aging resistance, and heat resistance, and the final peel strength after the aging treatment is still ≥ 10 N/mm, and the adhesive can maintain excellent adhesion performance at a high temperature of 75°C or even 125°C, can maintain stable adhesion performance under the harsh conditions of hydrolysis, high temperature, and aging, and has good storage stability, which is an adhesive material with excellent overall performance.

### DETAILED DESCRIPTION

The technical solutions of the present application are further described below via specific embodiments. It should be understood by those skilled in the art that the embodiments are merely an aid to understanding the present application and should not be regarded as a specific limitation of the present application.

In the following specific embodiments of the present application, the used polyacid and small-molecule polyol are commercially available chemicals; for example, succinic acid (butanedioic acid, bio-based polyacid) is purchased from DSM, sebacic acid (bio-based polyacid) is purchased from Yihai Kerry, 1,3-propanediol (bio-based small-molecule polyol) is purchased from DuPont, and 1,6-hexanediol (petroleum-based small-molecule polyol) is purchased from UBE.

In the following specific embodiments of the present application, the acid value and hydroxyl value of the bio-based polyol are tested by titration, the number average molecular mass is tested by gel permeation chromatography (GPC), and the bio-based content (%) = 100% × mass of bio-based raw material/product mass.

### Preparation Example 1

A bio-based polyol A1 (bio-based polyester polyol), wherein raw materials comprise (in parts by weight): 110.92 parts of succinic acid, 135.19 parts of 1,6-hexanediol, and 0.0123 parts of tetraisopropyl titanate; and the specific preparation method is as follows:
according to the formula amount, succinic acid, 1,6-hexanediol and tetraisopropyl titanate were added into a reaction flask, slowly heated to 220°C, and reacted for 12 h, and then 33.84 parts of water produced by condensation and 13.33 parts of excess 1,6-hexanediol were removed by vacuuming, and the reaction was stopped when the acid value decreased to less than or equal to 2 mg KOH/g, and the hydroxyl value was 56 mg KOH/g, and the bio-based polyol A1 with a number average molecular mass of 2000 and a bio-based content of 55.8% was obtained.

### Preparation Example 2

A bio-based polyol A2 (bio-based polyester polyol), wherein raw materials comprise (in parts by weight): 160.59 parts of sebacic acid, 74.83 parts of 1,3-propanediol, and 0.0118 parts of tetraisopropyl titanate; and the specific preparation method is as follows:
according to the formula amount, sebacic acid, 1,3-propanediol, and tetraisopropyl titanate were added into a reaction flask, slowly heated to 220°C, and reacted for 12 h, and then 28.58 parts of water produced by condensation and 6.81 parts of excess 1,3-propanediol were removed by vacuuming, and the reaction was stopped when the acid value decreased to less than or equal to 2 mg KOH/g, and the hydroxyl value was 56 mg KOH/g, and the bio-based polyol A2 with a number average molecular mass of 2000 and a bio-based content of 100% was obtained.

### Preparation Example 3

A bio-based polyol A3 (bio-based polyester polyol), wherein raw materials comprise (in parts by weight): 122.06 parts of sebacic acid, 54.7 parts of 1,3-propanediol, and 0.00885 parts of tetraisopropyl titanate; and the specific preparation method is as follows:
according to the formula amount, sebacic acid, 1,3-propanediol, and tetraisopropyl titanate were added into a reaction flask, slowly heated to 220°C, and reacted for 12 h, and then 14.29 parts of water produced by condensation and 3.41 parts of excess 1,3-propanediol were removed by vacuuming, and the reaction was stopped when the acid value decreased to less than or equal to 2 mg KOH/g, and the hydroxyl value was 35 mg KOH/g, and the bio-based polyol A3 with a number average molecular mass of 3000 and a bio-based content of 100% was obtained.

The raw materials involved in the following specific embodiments of the present application comprise:
(1) Polyol:
   bio-based polyol A1, Preparation Example 1;
   bio-based polyol A2, Preparation Example 2;
   bio-based polyol A3, Preparation Example 3;
   bio-based polyol Priplast 3238, 100% bio-based dimer acid polyester polyol with a hydroxyl value of 56 mg KOH/g and a number average molecular mass of 2000, purchased from CRODA;
   bio-based polyol ECOPROL H2000, poly(trimethylene ether) glycol with a hydroxyl value of 56 mg KOH/g and a number average molecular mass of 2000, purchased from SK Chemicals;
   petroleum-based polyol, poly(1, 4-butanediol adipate) diol, XCP-44, with a hydroxyl value of 56 mg KOH/g and a number average molecular mass of 2000, purchased from Xuchuan Chemical.
(2) Diisocyanate:
   aliphatic diisocyanate having an odd number of carbon atoms, 1,5-pentamethylene diisocyanate, PDI;
   1,6-hexamethylene diisocyanate, HDI, purchased from Wanhua Chemical;
   isophorone diisocyanate, IPDI, purchased from Wanhua Chemical.
(3) Reactive emulsifier:
   poly(ethylene glycol) monomethyl ether, MPEG 1000, with a hydroxyl value of 56 mg KOH/g, a number average molecular mass of 1000, and a functionality of 1;
   sodium diaminoethyl sulfonate, Grade A-95, purchased from Evonik Chemicals.
(4) Catalyst: bismuth neodecanoate, BICAT 2010, purchased from American Shepherd Chemical.
(5) Chain extender: 1,3-propanediol (biological method).
(6) Polymerization inhibitor: p-hydroxyanisole.
(7) Alkenyl-containing monomer:
   vinyl acetate, VAc, purchased from Sinopharm Chemical Reagent;
   vinyl neodecanoate, VV-10, purchased from Hexion;
   butyl acrylate, BA, purchased from Sinopharm Chemical Reagent;
   butyl methacrylate, BMA, purchased from Sinopharm Chemical Reagent;
   hydroxyethyl acrylate, HEA, purchased from Sinopharm Chemical Reagent;
   isooctyl acrylate, 2-EHA, purchased from Sinopharm Chemical Reagent.
(8) Crosslinking agent:
   diacetone acrylamide, DAAM, purchased from Wuxi Liangxi Fine Chemicals Co., LTD;
   adipic dihydrazide, ADH, purchased from Wuxi Liangxi Fine Chemicals Co., LTD.
(9) Emulsion polymerization emulsifier:
   allyloxy isomeric alcohol ether sulfate ammonia salt, SR-1025, purchased from Japan Adeka;
   sulfosuccinate alkyl alcohol ether sodium salt, A 102K, purchased from Shanghai Honesty Fine Chemical Co., LTD.
(10) Initiator:
   tert-butyl hydroperoxide, TBHP, 70% TBHP in H₂O, purchased from Sinopharm Chemical Reagent;
   sodium dithionite, insurance powder, purchased from Sinopharm Chemical Reagent.
(11) pH adjusting agent: organic amine, AMP-95, purchased from Angus.
(12) Defoaming agent: BYK 021, purchased from BYK Chemical.

### Examples 1-6

A modified bio-based waterborne polyurethane and a preparation method therefor, raw material components of the modified bio-based waterborne polyurethane are shown in Table 1, and the unit of the usage amount of each component is "part".

**Table 1**

| | | Example 1 | Example 2 | Example 3 | Example 4 | Example 5 | Exampl e 6 |
|---|---|---|---|---|---|---|---|
| Bio-based polyol | A1 | 81.15 | | | | | |
| | A2 | | 81.15 | | | | |
| | A3 | | | | | 69.3 | 69.3 |
| | Priplast32 38 | | | | | 60 | 60 |
| | ECOPRO L H2000 | | | 81.15 | 81.15 | | |
| Reactive emulsifier | MPEG 1000 | 2 | 2 | 2 | 2 | 2 | 2 |
| | A-95 | 2.25 | 2.25 | 2.25 | 2.25 | 2.25 | 2.25 |
| Diisocyanate | PDI | 10.335 | 10.335 | 10.335 | 10.335 | 10.335 | 10.335 |
| Chain extender | 1,3-propanedi ol | 0.425 | 0.425 | 0.425 | 0.425 | 0.425 | 0.425 |
| Catalyst | BICAT 2010 | 0.01 | 0.01 | 0.01 | 0.01 | 0.01 | 0.01 |
| Polymerizati on inhibitor | p-hydroxyan isole | 0.0045 | 0.0045 | 0.0045 | 0.0045 | 0.0045 | 0.0045 |
| Alkenyl-containing monomer | VAc | 60 | 60 | 60 | 60 | 0 | 60 |
| | VV-10 | 30 | 30 | 30 | 30 | 30 | 30 |
| | BA | | | | | 30 | |
| | 2-EHA | | | | | 30 | |
| Crosslinking agent | DAAM | 2.5 | 2.5 | 2.5 | 2.5 | 2.5 | 2.5 |
| | ADH | 1.5 | 1.5 | 1.5 | 1.5 | 1.5 | 1.5 |
| Emulsion polymerizati on emulsifier | SR-1025 | 1 | 1 | 1 | 1 | 1 | 1 |
| | A 102K | | | | | | |
| Defoaming agent | BYK 021 | 0.05 | 0.05 | 0.05 | 0.05 | 0.05 | 0.05 |
| Initiator | TBHP | 0.45 | 0.45 | 0.45 | 0.45 | 0.45 | 0.45 |
| | Insurance powder | 0.3 | 0.3 | 0.3 | 0.3 | 0.3 | 0.3 |
| pH adjusting agent | AMP-95 | 0.1 | 0.1 | 0.1 | 0.1 | 0.1 | 0.1 |

The preparation method for the modified bio-based waterborne polyurethane comprises the following steps:
(1) according to the formula amount, bio-based polyol, MPEG 1000, polymerization inhibitor, catalyst, VV-10, and PDI were added to a four-necked flask equipped with nitrogen protection, a thermometer and mechanical stirring, and reacted at 65°C for 2 h, and then added with other alkenyl-containing monomer and chain extender, and continued to react at 65°C for 2 h, and after the NCO content of the system reached the reaction end (< 0.91%), cooled to 40°C, A-95 was added, and the reaction was continued at 45°C for 30 min to obtain the polyurethane prepolymer containing the alkenyl-containing monomer;
(2) deoxygenated deionized water (185 parts), DAAM, SR-1025, and a defoaming agent were added to a four-necked flask equipped with nitrogen protection, a thermometer and mechanical stirring, the stirring was started to mix the above raw materials well to obtain an aqueous phase; a temperature of the materials was controlled at 20°C, and a rotation speed of stirring was 500 rpm, and the polyurethane prepolymer containing the alkenyl-containing monomer obtained in step (1) was added dropwise into the aqueous phase within 1 h, and the dispersion was continued for 2 h to complete the emulsification so as to obtain the polyurethane emulsion containing the alkenyl-containing monomer; and
(3) the polyurethane emulsion containing the alkenyl-containing monomer obtained in step (2) was added to a four-necked flask equipped with nitrogen protection, a thermometer and mechanical stirring, the stirring was started, the rotation speed was 180 rpm, the temperature was controlled at 40°C, the initiator (TBHP and insurance powder) was added dropwise into the system within 15 min, after the dropwise addition was completed, the reaction was continued to be held at 55°C for 30 min; after the reaction, the system was cooled to 40°C or lower, a pH adjusting agent was added to adjust the pH to about 8, ADH was added and stirred well, and finally the material was filtered out with a 300-mesh filter to obtain the modified bio-based waterborne polyurethane.

### Examples 7-12

A modified bio-based waterborne polyurethane and a preparation method therefor, raw material components of the modified bio-based waterborne polyurethane are shown in Table 2, and the unit of usage amount of each component is "part".

**Table 2**

| | | Example 7 | Example 8 | Example 9 | Example 10 | Example 11 | Example 12 |
|---|---|---|---|---|---|---|---|
| Bio-based polyol | A1 | | | | | | |
| | A2 | 81.15 | 81.15 | 81.15 | | 81.15 | 81.15 |
| | A3 | | | | 69.3 | | |
| | Priplast323 8 | | | | 60 | | |
| | ECOPROL H2000 | | | | | | |
| Reactive emulsifier | MPEG 1000 | 4 | 4 | 2 | 2 | 2 | 2 |
| | A-95 | | | 2.25 | 2.25 | 2.25 | 2.25 |
| Diisocyan ate | PDI | 10.335 | 10.335 | 10.335 | 10.335 | 6.201 | 4.134 |
| | HDI | | | | | 4.51 | 6.76 |
| Chain | 1,3- | 0.425 | 0.425 | 0.425 | 0.425 | 0.425 | 0.425 |
| extender | propanedio l | | | | | | |
| Catalyst | BICAT 2010 | 0.01 | 0.01 | 0.01 | 0.01 | 0.01 | 0.01 |
| Polymeriz ation inhibitor | p-hydroxyani sole | 0.0045 | 0.0045 | 0.0045 | 0.0045 | 0.0045 | 0.0045 |
| Alkenyl-containing monomer | VAc | | | 90 | 0 | 60 | 60 |
| | VV-10 | 30 | 60 | | | 30 | 30 |
| | BA | | | | 45 | | |
| | 2-EHA | | | | 45 | | |
| | HEA | 10 | 10 | | | | |
| Crosslinki ng agent | DAAM | | | 2.5 | 2.5 | 2.5 | 2.5 |
| | ADH | | | 1.5 | 1.5 | 1.5 | 1.5 |
| Emulsion polymeriz ation emulsifier | SR-1025 | | | 1 | 1 | 1 | 1 |
| | A 102K | 2 | 2 | | | | |
| Defoamin g agent | BYK 021 | 0.05 | 0.05 | 0.05 | 0.05 | 0.05 | 0.05 |
| Initiator | TBHP | 0.2 | 0.2 | 0.45 | 0.45 | 0.45 | 0.45 |
| | Insurance powder | 0.135 | 0.135 | 0.3 | 0.3 | 0.3 | 0.3 |
| Neutralize r | AMP-95 | 0.1 | 0.1 | 0.1 | 0.1 | 0.1 | 0.1 |

The preparation method for the modified bio-based waterborne polyurethane in Examples 7-8 comprises the following steps:
(1) according to the formula amount, bio-based polyol, MPEG 1000, polymerization inhibitor, catalyst, VV-10, and PDI were added to a four-necked flask equipped with nitrogen protection, a thermometer and mechanical stirring, and reacted at 60°C for 2 h, and then added with chain extender, and reacted at 60°C for 2 h, and then added with hydroxyl-containing alkenyl-containing monomer HEA, and the reaction was continued at 60°C, and after the NCO content of the system reached the reaction end (<0.2%), the system was cooled to 40°C to obtain the polyurethane prepolymer containing the alkenyl-containing monomer;
(2) deoxygenated deionized water (105 parts), A 102K, and a defoaming agent were added to a four-necked flask equipped with nitrogen protection, a thermometer, and mechanical stirring, the stirring was started to mix the above raw materials well to obtain an aqueous phase; a temperature of the materials was controlled at 25°C, and a rotation speed of stirring was 600 rpm, and the polyurethane prepolymer containing the alkenyl-containing monomer obtained in step (1) was added dropwise into the aqueous phase within 1 h, and the dispersion was continued for 2 h to complete the emulsification so as to obtain the polyurethane emulsion containing the alkenyl-containing monomer; and
(3) the polyurethane emulsion containing the alkenyl-containing monomer obtained in step (2) was added to a four-necked flask equipped with nitrogen protection, a thermometer and mechanical stirring, the stirring was started, the rotation speed was 200 rpm, the temperature was controlled at 35°C, the initiator (TBHP and insurance powder) was added dropwise into the system within 15 min, after the dropwise addition was completed, the reaction was continued to be held at 50°C for 30 min; after the reaction, the system was cooled to 40°C or lower, a pH adjusting agent was added to adjust the pH to about 8, and the material was filtered out with a 300-mesh filter to obtain the modified bio-based waterborne polyurethane.

The preparation method for the modified bio-based waterborne polyurethane in Examples 9-12 is the same as in Examples 1-6.

### Comparative Examples 1-3

A modified waterborne polyurethane and a preparation method therefor, raw material components of the modified waterborne polyurethane are shown in Table 3, and the unit of usage amount of each component is "part".

**Table 3**

| | | Comparative Example 1 | Comparative Example 2 | Comparative Example 3 |
|---|---|---|---|---|
| Petroleum-based polyol | XCP-44 | 81.15 | | |
| Bio-based polyol | A1 | | | |
| | A2 | | 81.15 | 81.15 |
| | A3 | | | |
| | Priplast3238 | | | |
| | ECOPROL H2000 | | | |
| Reactive emulsifier | MPEG 1000 | 2 | 2 | 2 |
| | A-95 | 2.25 | 2.25 | 2.25 |
| Diisocyanate | PDI | 10.335 | | |
| | HDI | | 11.28 | 7.8 |
| | IPDI | | | 4.42 |
| Chain extender | 1,3-propanediol | 0.425 | 0.425 | 0.425 |
| Catalyst | BICAT 2010 | 0.01 | 0.01 | 0.01 |
| Polymerization inhibitor | p-hydroxyanisole | 0.0045 | 0.0045 | 0.0045 |
| Alkenyl-containing monomer | VAc | 60 | 60 | 60 |
| | VV-10 | 30 | 30 | 30 |
| | BA | | | |
| | 2-EHA | | | |
| Crosslinking agent | DAAM | 2.5 | 2.5 | 2.5 |
| | ADH | 1.5 | 1.5 | 1.5 |
| Emulsion polymerization emulsifier | SR-1025 | 1 | 1 | 1 |
| | A 102K | | | |
| Defoaming agent | BYK 021 | 0.05 | 0.05 | 0.05 |
| Initiator | TBHP | 0.45 | 0.45 | 0.45 |
| | Insurance powder | 0.3 | 0.3 | 0.3 |
| pH adjusting agent | AMP-95 | 0.1 | 0.1 | 0.1 |

The preparation method for the modified waterborne polyurethane in Comparative Examples 1-3 is the same as that of Example 1, wherein the polyurethane prepolymer in Comparative Example 2 is in the form of gel, so that the subsequent preparation cannot be performed and the modified waterborne polyurethane cannot be obtained.

### Comparative Example 4

A modified waterborne polyurethane, which is a physical blend-modified system, comprises 50 parts by weight of Dispercoll U54 (amorphous waterborne polyurethane emulsion for adhesives with a solid content of 50% and a heat activation temperature of 50-60°C, Covestro) and 50 parts by weight of DA 102 (vinyl acetate-ethylene copolymerization emulsion with a solid content of 55%, a pH of 4.5-6.5, and a glass transition temperature Tg of 0°C). The two emulsions were mixed well to obtain the modified waterborne polyurethane.

The modified bio-based waterborne polyurethane provided in Examples 1-12, Comparative Example 1, and Comparative Example 3 were subjected to performance tests as follows.
(1) Solid content: the solid content was tested in accordance with the method in GB/T 2793-1995;
(2) Viscosity: the viscosity was tested in accordance with the method in GB/T 2794-2013 at 25°C;
(3) Particle size: the particle size was tested by Malvern laser particle size analyzer;
(4) Bio-based content: bio-based content (%) = 100% × bio-based raw material mass / product mass;
(5) Vinyl content: vinyl content (%) = 100% × alkenyl-containing monomer mass / dry mass of modified bio-based polyurethane;
(6) Thermal activation temperature: the thermal activation temperature was tested in accordance with the thermal activation temperature test method in US4870125, and the specific method is as follows.

Sample strip preparation: a PVC material with a thickness of 4 mm and a dioctyl phthalate (DOP) content of 30% was polished with a 300-grit sandpaper, and the modified bio-based waterborne polyurethane was coated on this substrate with a wire rod by a wet-film thickness of 0.1 mm, and dried at room temperature for 30 min for later use;
a PVC sample strip with a width of 1 cm was stored in a drying cabinet at the required temperature for 1 h, and then two sample strips were immediately placed together and lightly pressed with fingers to form an overlapping area of 1 cm × 1 cm. If the two surfaces in contact under these conditions are completely bonded in the entire area and only separated by a significant force immediately after the bond is formed, this temperature range is the thermal activation temperature.

The test results are shown in Table 4.

**Table 4**

| | Solid content (%) | Viscosity (mPa·s) | Particle size (nm) | Bio-based content (%) | Vinyl content (%) | Thermal activation temperatur e (°C) |
|---|---|---|---|---|---|---|
| Example 1 | 50 | 660 | 150 | 27.68 | 48.15 | 100-120 |
| Example 2 | 50 | 1200 | 110 | 46.72 | 48.15 | 50-55 |
| Example 3 | 50 | 1310 | 90 | 46.72 | 48.15 | 40-45 |
| Example 4 | 50 | 930 | 90 | 46.72 | 48.15 | 40-45 |
| Example 5 | 55 | 1560 | 160 | 57.01 | 38.50 | 20-25 |
| Example 6 | 55 | 1320 | 220 | 57.01 | 38.50 | 25-30 |
| Example 7 | 45 | 1820 | 88 | 64.19 | 28.90 | 50-55 |
| Example 8 | 50 | 960 | 122 | 52.75 | 41.56 | 40-45 |
| Example 9 | 50 | 850 | 136 | 27.68 | 48.16 | 55-60 |
| Example 10 | 50 | 732 | 155 | 57.01 | 38.50 | 45-50 |
| Example 11 | 50 | 1423 | 116 | 44.91 | 48.15 | 75-80 |
| Example 12 | The overly high viscosity prevents subsequent operations and tests. | | | | | |
| Comparati ve Example 1 | 50 | 260 | 105 | 3.99 | 48.15 | 40-45 |
| Comparati ve Example 3 | 50 | 910 | 81 | 42.47 | 47.69 | 110-120 |

### Application Example 1

An adhesive, which is a one-component system, comprises the following components by weight:

| | |
|---|---|
| modified waterborne polyurethane | 100 parts; |
| defoaming agent | 0.1 parts; |
| wetting agent | 0.3 parts; |
| thickening agent | 0.2 parts; and |
| pH adjusting agent | appropriate amount; |

wherein the modified bio-based waterborne polyurethanes provided in Examples 1-6, Examples 9-11, Comparative Example 1, and Comparative Examples 3-4 are separately used as the modified waterborne polyurethane; the defoaming agent is BYK 021 (BYK Chemical), the wetting agent is BYK 024 (BYK Chemical), and the thickening agent is the polyurethane-type thickening agent Vesmody U605 (Wanhua Chemical); and the pH adjusting agent is organic base AMP-95 (Angus), and its usage amount is controlled at which adjusts the pH of the adhesive to be 8.

The preparation method for the adhesive is as follows: according to the formula amount, the modified waterborne polyurethane, defoaming agent, wetting agent and pH adjusting agent were adjusted to pH 8, the dispersion was continued for 15 min, then the rotation speed was increased to 400 rpm, and the thickening agent was added slowly, and after the dispersion was completed, the system was allowed to stand for defoaming, and then filtration was performed through a 300-mesh screen and the material was discharged to obtain the adhesive.

### Application Example 2

An adhesive, which is a two-component system, comprises a component A and a component B; the component A comprises the following components by weight:

| | |
|---|---|
| modified waterborne polyurethane | 100 parts; |
| defoaming agent | 0.1 parts; |
| wetting agent | 0.3 parts; |
| thickening agent | 0.2 parts; and |
| pH adjusting agent | appropriate amount; |

wherein the modified bio-based waterborne polyurethanes provided in Examples 7-8 are separately used as the modified waterborne polyurethane; the defoaming agent is BYK 021 (BYK Chemical), the wetting agent is BYK 024 (BYK Chemical), and the thickening agent is the polyurethane-type thickening agent Vesmody U605 (Wanhua Chemical); and the pH adjusting agent is organic base AMP-95 (Angus), and its usage amount is controlled at which adjusts the pH of the adhesive to be 8.

The component B is 4 parts of Bayhydur 305 (non-ionic modified isocyanate curing agent based on HDI with a solid content of 100% and an NCO content of 16.2%, Covestro).

The preparation method for the adhesive is as follows: according to the formula amount, the modified waterborne polyurethane, a defoaming agent, a wetting agent and a pH adjusting agent were adjusted to pH 8, the dispersion was continued for 15 min, then the rotation speed was increased to 400 rpm, and the thickener was added slowly, and after the dispersion was completed, the system was allowed to stand for defoaming, and then filtration was performed through a 300-mesh filter and the material was discharged to obtain the component A; the component B was slowly added into the component A at a rotation speed of 100 rpm, dispersed for 5 min, and then filtered through a 300-mesh filter, and the material was discharged to obtain the adhesive.

The aforementioned adhesives were subjected to the following performance tests.

### (1) Peel strength

A transparent PVC sheet with a thickness of 0.25 mm was used as a substrate, and cut into 250 mm×300 mm blocks with a paper cutter, and the surface was cleaned with ethanol. The adhesive to be tested was coated on the substrate with a coating length of 150 mm by using a 50 µm RDS coating rod. The adhesive-coated substrate was air-dried at room temperature (for generally more than or equal to 2 h), and then two adhesive-coated PVCs having the same size were laminated and cut into 25 mm×150 mm strips with a paper cutter, and the strip samples were thermally activated with a heat-sealing machine at 70°C and a pressure of 3.5 kg/cm² for 30 s, and the T-strength of the strip samples was tested by Instron at a speed of 30 cm/min. The instantaneous peel strength was tested within 15 min after thermal activation of the samples, and the final peel strength was tested after the samples were thermally activated and placed at room temperature for 7 days.

Since the modified bio-based waterborne polyurethane provided in Example 1 and Comparative Example 3 have a relatively high thermal activation temperature (see Table 4 for detail), the modified bio-based waterborne polyurethane adhesives in Example 1 and Comparative Example 3 were used to prepare samples in accordance with the aforementioned method, and then were thermally activated at 130°C and a pressure of 3.5 kg/cm² for 30 s, and the T-strength of the samples was tested by Instron at a speed of 30 cm/min. The instantaneous peel strength was tested within 15 min after thermal activation of the samples, and the final peel strength was tested after the samples were thermally activated and placed at room temperature for 7 days.

Since the modified bio-based waterborne polyurethane provided in Example 11 has a relatively high thermal activation temperature (see Table 4 for detail), the modified bio-based waterborne polyurethane adhesive in Example 11 was used to prepare samples in accordance with the aforementioned method, and then were thermally activated at 100°C and a pressure of 3.5 kg/cm² for 30 s, and the T-strength of the samples was tested by Instron at a speed of 30 cm/min. The instantaneous peel strength was tested within 15 min after thermal activation of the samples, and the final peel strength was tested after the samples were thermally activated and placed at room temperature for 7 days.

### (2) Adhesion temperature resistance

The preparation of test samples is the same as in (1) Peel strength, the sample was cut into 50 mm × 25 mm strips with a paper cutter, wherein one end of the adhesive-coated area of the surface was 25 mm × 25 mm, and the other end of the 25 mm x 25 mm laminated PVC without adhesive was separated at 180 degrees, one end was hung with a 100 g weight, and the other end was hung in a blast oven. The temperature was increased from room temperature to 125°C with a rate of 25°C/h, and the temperature at which the sample was split apart and the weight fell down was recorded, and the peel degree of the bonding surfaces was recorded for those samples that had not been split apart at 125°C.

### (3) Hydrolysis-aging resistance

100 mL of the adhesive to be tested was put into a sealed polytetrafluoroethylene bottle and placed in a 75°C oven for 2 weeks for accelerated aging test. Then the instantaneous peel strength and final peel strength after the accelerated aging were tested according to the test method of (1) Peel strength.

### (4) Storage stability

100 mL of the adhesive to be tested was placed in a sealed polytetrafluoroethylene bottle and placed in an oven at 55°C for 8 weeks, the flow state was subjected to visual inspection, and the viscosity at 25°C was tested.

The test results are shown in Table 5:

**Table 5**

| Modified waterborne polyurethane | Peel strength (N/mm) | | Adhesion temperature resistance | | Hydrolysis - aging resistance (N/mm) | | Storage stability | |
|---|---|---|---|---|---|---|---|---|
| | Instan taneo us | Final | Falling temperat ure (°C) | Pull-off distance (mm) | Instant aneous | Final | Appea rance | Viscosity (mPa·s) |
| Example 1A | 4.1 | 8.8 | -- | 1.2 | 3.9 | 8.6 | Fluid | 538 |
| Example 1B | 8.3 | 18.1 | -- | 0.2 | 8.1 | 17.9 | -- | -- |
| Example 2 | 8.5 | 18.2 | -- | 2.5 | 8.7 | 16.6 | Fluid | 960 |
| Example 3 | 5.8 | 14.5 | -- | 3.6 | 6.1 | 12.1 | Fluid | 1032 |
| Example 4 | 8.8 | 11.6 | -- | 3.3 | 8.5 | 9.8 | Fluid | 690 |
| Example 5 | 8.1 | 17.1 | 75 | -- | 8.3 | 16.4 | Fluid | 432 |
| Example 6 | 8.2 | 15.3 | 75 | -- | 7.8 | 14.3 | Fluid | 683 |
| Example 7 | 5.5 | 16.3 | -- | 0.5 | 5.3 | 14.2 | Fluid | 761 |
| Example 8 | 7.8 | 20.6 | -- | 0.8 | 7.1 | 16.1 | Fluid | 526 |
| Example 9 | 6.6 | 10.6 | -- | 4.3 | 6.5 | 7.3 | Fluid | 880 |
| Example 10 | 5.9 | 9.8 | -- | 6.1 | 4.9 | 6.8 | Fluid | 962 |
| Example 11A | 7.9 | 16.3 | -- | 2.8 | 8.1 | 13.2 | Fluid | 1421 |
| Example 11B | 7.6 | 16.6 | -- | 2.6 | 8.0 | 13.4 | Non-fluid | -- |
| Comparative Example 1 | 5.5 | 10.2 | 65 | -- | 4.3 | 9.9 | Fluid | 1130 |
| Comparative Example 3A | 2.5 | 4.9 | -- | 5.5 | 2.2 | 3.6 | Fluid | 630 |
| Comparative Example 3B | 7.6 | 17.3 | -- | 0.4 | 5.3 | 8.9 | Non-fluid | -- |
| Comparative Example 4 | 6.3 | 12.1 | 75 | -- | 3.2 | 9.6 | Non-fluid | -- |

In Table 5, "Example 1A", "Example 11A", and "Comparative Example 3A" represent that the thermal activation temperature in the performance test of adhesives is 70°C; "Example 1B" and "Comparative Example 3B" represent that the thermal activation temperature in the performance test of the adhesive is 130°C; "Example 11B" represents that the thermal activation temperature in the performance test of the adhesive is 100°C; the test data of the other examples and comparative examples are obtained under the condition that the thermal activation temperature is 70°C.

Since the modified bio-based waterborne polyurethane in Example 1 has a thermal activation temperature of 100-120°C, it is not fully activated at 70°C and 3.5 kg/cm², the peel strength in Example 1A is slightly low, and after the activation is completed at 130°C, the adhesive has high instantaneous peel strength and high final peel strength, and excellent adhesion performance, hydrolysis resistance, and heat resistance.

It can be seen from the performance test data in Table 5 that the modified bio-based waterborne polyurethane provided in the present application has excellent storage stability, adhesion performance, hydrolysis resistance, and heat resistance. Through the design and further optimization of the components, the adhesive prepared by the modified bio-based waterborne polyurethane has an instantaneous peel strength of > 4.0 N/mm, the instantaneous peel strength of the adhesive after the full thermal activation is 5.5-8.8 N/mm, and a relatively high initial adhesive strength can be rapidly established; the final peel strength of the adhesive after the full thermal activation is 9.8-20.6 N/mm, and the adhesion performance is excellent. The adhesive has good water resistance, hydrolysis resistance, aging resistance and heat resistance, and has a final peel strength after the aging treatment of 9.8-17.9 N/mm, and can maintain excellent adhesion performance at a high temperature of 75°C or even 125°C. It also has high storage stability and good fluidity after long-term storage at high temperature.

In the present application, by designing the alkenyl-containing monomer, the modified bio-based waterborne polyurethane is suitable for different adhesive systems. For example, in Examples 7-8, hydroxyl-containing HEA is introduced to obtain the hydroxyl-containing modified bio-based waterborne polyurethane, which can be used to prepare the high-performance two-component adhesive. In addition, the alkenyl-containing monomer contains vinyl neodecanoate, which is combined with other components to further enhance the comprehensive performance of the modified bio-based waterborne polyurethane; if the system does not contain vinyl neodecanoate (Examples 9-10), the adhesive strength, heat resistance and hydrolysis resistance of the modified bio-based waterborne polyurethane and the adhesive thereof are reduced.

In the present application, the bio-based polyol, the diisocyanate having an odd number of carbon atoms and the alkenyl-containing monomer are combined to obtain the high-performance modified bio-based waterborne polyurethane by using a specific solvent-free process. In the diisocyanate of Example 12, a content of the 1,5-pentamethylene diisocyanate (PDI) having an odd number of carbon atoms is too low, which affects the crystallization property and symmetry of the polymer, so that the viscosity is too high for the subsequent tests and use. Compared with the modified waterborne polyurethane prepared by using the petroleum-based polyol in Comparative Example 1, the modified bio-based waterborne polyurethane based on bio-based polyol in the present application is not only more green and environmentally friendly, but also achieves a significant improvement in adhesion performance, heat resistance, and hydrolysis-aging resistance. In Comparative Example 2, HDI is used; it reacts with the bio-based polyol to produce a gel-like prepolymer that cannot be subjected to subsequent preparation, and has poor processability and operability. In Comparative Example 3, the diisocyanate of combined HDI and IPDI is used, and its processability is not bad, and the modified waterborne polyurethane emulsion can be obtained, but it has poor adhesion performance, heat resistance and hydrolysis-aging resistance, and it is impossible to obtain an adhesive product with good performance. In Comparative Example 4, the blending system of commercially available waterborne polyurethane and vinyl acetate-ethylene copolymer emulsion is used; although the adhesion performance is good, the heat resistance and hydrolysis-aging resistance of the adhesive are obviously insufficient, and the storage stability is poor, which cannot meet the use requirements.

The applicant declares that the modified bio-based waterborne polyurethane, the preparation method therefor and the application thereof in the present application are illustrated by the above examples in the present application, but the present application is not limited to the above examples, that is, the present application does not necessarily rely on the above examples to be implemented. Those skilled in the art should understand that any improvement of the present application, the equivalent substitution of raw materials, the addition of auxiliary ingredients, and the selection of specific methods of the products in the present application shall fall within the protection scope and disclosure scope of the present application.

## Claims

1. A modified bio-based waterborne polyurethane, which has raw materials comprising the following components by weight:
| | |
|---|---|
| bio-based polyol | 50-150 parts; |
| diisocyanate | 5-30 parts; |
| reactive emulsifier | 0.1-10 parts; |
| alkenyl-containing monomer | 20-200 parts; and |
| initiator | 0.01-5 parts; |
wherein the diisocyanate comprises an aliphatic diisocyanate having an odd number of carbon atoms.

2. The modified bio-based waterborne polyurethane according to claim 1, wherein the bio-based polyol has a hydroxyl value of 28-112 mg KOH/g;
preferably, the bio-based polyol has a number average molecular mass of 1000-5000.

3. The modified bio-based waterborne polyurethane according to claim 1 or 2, wherein the bio-based polyol is bio-based polyester polyol and/or bio-based polyether polyol;
preferably, a raw material of the bio-based polyester polyol comprises a combination of polyacid and small-molecule polyol; wherein the polyacid comprises at least one bio-based polyacid, and/or, the small-molecule polyol comprises at least one bio-based small-molecule polyol;
preferably, the bio-based polyacid comprises any one or a combination of at least two of succinic acid, glutaric acid, sebacic acid, undecanedioic acid, dodecanedioic acid, hydrogenated dimer acid, or hydrogenated ricinoleic acid;
preferably, the bio-based small-molecule polyol comprises any one or a combination of at least two of ethylene glycol, propylene glycol, butylene glycol, pentylene glycol, glycerol, or hydrogenated dimer alcohol;
preferably, the bio-based polyether polyol comprises poly(trimethylene ether) glycol.

4. The modified bio-based waterborne polyurethane according to claim 1, wherein the aliphatic diisocyanate having an odd number of carbon atoms comprises 1,5-pentamethylene diisocyanate;
preferably, the mass percentage of the aliphatic diisocyanate having an odd number of carbon atoms is ≥ 60% in the diisocyanate;
preferably, the reactive emulsifier comprises any one or a combination of at least two of poly(ethylene glycol) monomethyl ether, poly(ethylene glycol), ethylene oxide-propylene oxide copolymer diol, sodium propylene oxide-butylene glycol sulfonate, or sodium diaminoethyl sulfonate, and further preferably, a combination of poly(ethylene glycol) monomethyl ether and sodium diaminoethyl sulfonate.

5. The modified bio-based waterborne polyurethane according to claim 1, wherein the alkenyl-containing monomer comprises any one or a combination of at least two of vinyl acetate monomer, vinyl tertiary-carbon ester monomer, acrylonitrile monomer, or acrylate monomer;
preferably, the vinyl tertiary-carbon ester comprises vinyl neodecanoate;
preferably, the acrylate monomer comprises any one or a combination of at least two of ethyl acrylate, butyl acrylate, tert-butyl acrylate, isooctyl acrylate, lauryl acrylate, hydroxyethyl acrylate, isobornyl acrylate, methyl methacrylate, butyl methacrylate, tert-butyl methacrylate, isooctyl methacrylate, lauryl methacrylate, isobornyl methacrylate, or hydroxyethyl methacrylate;
preferably, the mass percentage of the vinyl neodecanoate is 20-100% in the alkenyl-containing monomer.

6. The modified bio-based waterborne polyurethane according to claim 1, wherein the initiator comprises an oxidation-reduction initiation system;
preferably, in the oxidation-reduction initiation system, an oxidizing agent comprises any one or a combination of at least two of organic peroxide, hydrogen peroxide, or persulfate salt;
preferably, in the oxidation-reduction initiation system, a reducing agent is any one or a combination of at least two of sodium metabisulfite, sodium hydrogen sulfite, ferrous sulfate, sodium dithionite, isoascorbic acid, *N*,*N*-dimethylaniline, *N,N-*diethylaniline*,* ferrous pyrophosphate, mercaptan, ferrous chloride, or tetraethylenimine.

7. The modified bio-based waterborne polyurethane according to any one of claims 1-6, wherein the raw materials further comprise any one or a combination of at least two of catalyst, chain extender, polymerization inhibitor, crosslinking agent, or emulsion polymerization emulsifier;
preferably, the raw materials further comprise 0.001-0.5 parts by weight of the catalyst;
preferably, the catalyst comprises an organo-bismuth catalyst;
preferably, the raw materials further comprise 0.1-5 parts by weight of the chain extender;
preferably, the chain extender comprises an alcohol chain extender, and further preferably comprises any one or a combination of at least two of propylene glycol, dipropylene glycol, or diethylene glycol;
preferably, the raw materials further comprise 0.0001-0.1 parts by weight of the polymerization inhibitor;
preferably, the polymerization inhibitor comprises any one or a combination of at least two of p-hydroxyanisole, p-benzoquinone, or hydroquinone;
preferably, the raw materials further comprise 0.1-8 parts by weight of the crosslinking agent;
preferably, the crosslinking agent comprises any one or a combination of at least two of glycidyl methacrylate, diacetone acrylamide, ethylene glycol acetoacetate methacrylate, or adipic dihydrazide;
preferably, the raw materials further comprise 0.01-5 parts by weight of the emulsion polymerization emulsifier;
preferably, the emulsion polymerization emulsifier comprises anionic surfactant and/or non-ionic surfactant.

8. The modified bio-based waterborne polyurethane according to any one of claims 1-6, wherein the raw materials further comprise pH adjusting agent and/or defoaming agent;
preferably, the raw materials further comprise 0.01-0.5 parts by weight of the pH adjusting agent;
preferably, the raw materials further comprise 0.001-0.1 parts by weight of the defoaming agent;
preferably, the raw materials further comprise water.

9. A preparation method for the modified bio-based waterborne polyurethane according to any one of claims 1-8, which comprises the following steps:
(1) mixing and reacting bio-based polyol, diisocyanate, reactive emulsifier, and alkenyl-containing monomer to obtain a polyurethane prepolymer containing the alkenyl-containing monomer;
(2) mixing the polyurethane prepolymer containing the alkenyl-containing monomer obtained in step (1) with an aqueous phase, and emulsifying to obtain a polyurethane emulsion containing the alkenyl-containing monomer; and
(3) reacting the polyurethane emulsion containing the alkenyl-containing monomer obtained in step (2) in the presence of an initiator to obtain the modified bio-based waterborne polyurethane.

10. The preparation method according to claim 9, wherein materials mixed in step (1) further comprise any one or a combination of at least two of catalyst, chain extender, or polymerization inhibitor;
preferably, a method for the mixing and reacting in step (1) comprises method A or method B;
wherein the method A comprises: first mixing bio-based polyol, diisocyanate, polymerization inhibitor, catalyst, reactive emulsifier (30-70% of formula amount), and alkenyl-containing monomer (10-90% of formula amount) and performing a first-stage reaction; then adding chain extender and the remainder of formula amount of the alkenyl-containing monomer to the system, and performing a second-stage reaction; then adding the remainder of formula amount of the reactive emulsifier to the system and performing a third-stage reaction to obtain the polyurethane prepolymer containing the alkenyl-containing monomer;
the method B comprises: first mixing bio-based polyol, diisocyanate, polymerization blocker, catalyst, reactive emulsifier, and alkenyl-containing monomer (10-90% of formula amount), and performing a first-stage reaction; then adding chain extender and the remainder of formula amount of the alkenyl-containing monomer to the system, and performing a second-stage reaction to obtain the polyurethane prepolymer containing the alkenyl-containing monomer.

11. The preparation method according to claim 10, wherein the first-stage reaction and the second-stage reaction are each independently performed at a temperature of 55-80°C;
preferably, the first-stage reaction and the second-stage reaction are each independently performed for a period of 1-4 h;
preferably, the third-stage reaction is performed at a temperature of 40-50°C;
preferably, the third-stage reaction is performed for a period of 10-60 min.

12. The preparation method according to claim 9, wherein the aqueous phase in step (2) comprises water, optional crosslinking agent, optional emulsion polymerization emulsifier, and optional defoaming agent;
preferably, a method for the emulsifying in step (2) comprises: adding the polyurethane prepolymer containing the alkenyl-containing monomer to the aqueous phase and dispersing to obtain the polyurethane emulsion containing the alkenyl-containing monomer;
preferably, the reaction in step (3) is performed at a temperature of 50-60°C;
preferably, the reaction in step (3) is performed for a period of 20-90 min;
preferably, after the reaction in step (3), the preparation method also comprises a step of adjusting pH.

13. An application of the modified bio-based waterborne polyurethane according to any one of claims 1-8 in coatings or adhesives.

14. An adhesive, which comprises the modified bio-based waterborne polyurethane according to any one of claims 1-8;
preferably, the adhesive also comprises any one or a combination of at least two of thickening agent, wetting agent, defoaming agent, pH adjusting agent, or curing agent.
